# EUROPEAN PATENT SPECIFICATION

(11) **EP 3 966 024 B1**
(45) Date of publication and mention of the grant of the patent: **17.01.2024**
(21) Application number: 20723076.4
(22) Date of filing: 28.04.2020
(51) Int. Cl.: B30B 11/08, B30B 15/30, G01F 23/292

(54) **ROTARY PRESS FOR COMPRESSING A PRESSING FOOD MATERIAL**
ROTATIONSPRESSE ZUM KOMPRIMIEREN EINES PRESSENDEN LEBENSMITTELMATERIALS
PRESSE ROTATIVE DE COMPRESSION D'UN MATÉRIAU ALIMENTAIRE PAR PRESSAGE

(30) Priority: 10.05.2019 EP 19173729
(43) Date of publication of application: 16.03.2022
(73) Proprietor: Société des Produits Nestlé S.A., 1800 Vevey (CH)
(72) Inventor: KEHLENBECK, Volker, 78351 Bodman-Ludwigshafen (DE); LEAL, Roberto, 78224 SINGEN (DE); GRÜTER, Silvio, 8240 Thayngen (CH)
(74) Representative: Dinger, Hansjörg
(86) International application number: PCT/EP2020/061768
(87) International publication number: WO 2020/229164

(56) References cited:
- EP-A1- 0 952 432
- EP-A1- 2 764 989
- CN-A- 109 483 940
- CN-U- 203 557 740
- DE-A1-102017 207 162
- JP-A- 2017 030 001
- US-A1- 2016 243 781
- US-A1- 2018 162 023

## Description

The present invention relates to a rotary press for compressing a pressing food material, like food powder, into food tablets (e.g. bouillon tablets or bouillon cubes) as well as a method for pressing a food tablet, like a bouillon tablet or bouillon cube, by compression of a pressing food material, like a food powder with a rotary press.

Rotary presses are commonly known in the prior art. These presses usually comprise a conveyer for supplying a pressing (e.g. powdery) material to a feeding pipe of the press. The feeding pipe is usually arranged or oriented vertically for gravity feeding of the pressing material into a press section of the rotary press. Usually, the rotary presses are fed on a discontinuous basis. Upon a press process, a defined amount of pressing material for a tablet to be pressed is fed from the feeding pipe into the press system having die cavities for receiving an amount of pressing material to be compressed to a tablet. The fill level within the feeding pipe is usually kept within a given but quite large range. For instance, a single sensor measures, at a defined level of the feeding pipe, whether or not pressing material is present at this position of the feeding pipe. When the sensor is uncovered, a low level of pressing material inside the feeding pipe is detected. After a certain time of delay upon the low level detection but during continuation of the pressing process, a motor that drives the conveyer for feeding the pressing material into the feeding pipe is started to run at a fixed speed thus filling up the feeding pipe. When the sensor is then covered due to this filling-up, said motor continues running for a certain time of delay until it stops while the pressing process continues. This results in the fill level of pressing material within the feeding pipe varying within the mentioned range. It has been found that the above described known discontinuous feeding of the feeding pipe results in a weight variation of 0.15 g for a tablet having an average weight of 10 g. To avoid the fill level exceeding the sensor level or staying below the same for too long and thus avoiding the feeding pipe to drain or overflow, it is known to adjust the speed of the press system if a change of the fill level has not been detected for a defined time period. It has been found that the adjustment of the speed of the press system results in different hardness of the pressed tablet or cube. A habit of users of bouillon tablets is the crumbling of the tablet or cube into the dish during preparation process either to ensure good distribution and or to accelerate its dissolution time in the cooking water. A minimum hardness is desired to allow a secure wrapping of the produced tablet. A defined maximum hardness ensures that a user can break the tablet with the fingers without the use of additional tools or appliances.

DE 10 2017 207162 A1 describes a rotary tablet press according to the preamble of claim 1.

EP 0 952 432 A1 describes a method and device for detecting the amount of material stored in a plastic container, wherein the container's side walls are equipped with infrared light sources and light detectors.

It is thus an object of the present invention to provide a rotary press for compressing a pressing food material into a food tablet as well as a method for pressing a food tablet which allow for a more accurate or consistent production of food tablets with respect to average weight and preferably with respect to further characteristics of the pressed food material or food tablet.

The object is to be accomplished by means of the independent claims. The dependent claims advantageously study further the central idea of the present invention.

According to a first aspect of the present invention, there is provided a rotary press for compressing a pressing food material, like food powder, into food tablets.

According to the present invention, the generic term "tablet" covers any kind of pressing material being compressed or compacted from a powder or granule (mixture) into a solid dose. "Solid" means that it maintains its shape after the compression step; eventually supported by binders or other added agents. Tablets can have a cubic or disk or any other desired shape. A cubic tablet is herein also referred to as a "cube", e.g. a food cube or a bouillon cube, thus being a specific form of a (food) tablet.

According to the present invention, the term "food" or "food material" covers any edible or comestible substance/material. Further, the term "pressing food material" covers any kind of such "food material" provided in a compressible form able to be compressed into a tablet, e.g. a food powder or food granulate (mixture).

The rotary press comprises a feeding system. The feeding system comprises a feeder for continuously supplying the pressing food material and a feeding pipe for providing the pressing food material received from the feeder.

According to the present invention, the term "continuously supplying" means a continuous feeding or supply - here of pressing food material - irrespective of possible feeding or supply speed variations. The feeding pipe may be - as usual in the given technical field - of a gravity-fed type, i.e. allows for a gravity-fed supply of pressing food material by being substantially vertically arranged/oriented.

The rotary press further comprises a press system. The press system comprises a rotary die plate being drivable about a rotational axis. The die plate comprises a plurality of die cavities for successively receiving an amount of pressing food material provided by the feeding pipe and to produce food tablets inside the die cavities by means of punches upon a rotational movement of the die cavities of the rotary die plate with respect to the feeding system.

According to the present invention, the "press system" can, for instance, be a double punch system or a single punch system. The double punch system usually comprises two punches per die cavity, i.e. a lower and an upper punch provided at opposite sides of the die plate, which are relatively moveable to each other in a direction along the through-hole forming the die cavity for compressing the pressing material when being moved towards each other. The single punch system comprises one punch per die cavity, e.g. a lower punch, which is moveably provided relative to a static counter pressure plate. The counter pressure plate is preferably positioned opposite an opening of the die cavity via which opening the punch enters the die cavity for compressing the pressing material countered by the counter pressure plate. In principle, also other kinds of presses having a continuous tablet production are covered by the present invention.

The rotary press further comprises a sensor arrangement for detecting the fill level of the pressing food material in the feeding pipe.

The rotary press further comprises a control unit configured to (continuously) control a feeding speed of the feeder (e.g. via speed control of a feeder motor) for continuously supplying the pressing food material based on the detected fill level to keep the fill level at a defined fill level set point.

According to the present invention, "keep the fill level" is a set target to be aimed at most accurately and preferably means that the fill level is intended to be kept as good and exactly as possible at the desired or defined fill level set point while a (slight) deviation may occur, e.g., due to abnormal conditions of the rotary press itself (e.g. clogging, density variation), running conditions of the press system (e.g. successive filling/feeding of die cavities; which upon a fast running of the press system, e.g. at maximum speed, might be considered as an (approximately) continuous process), the pressing food material (e.g. agglomeration), the environment (e.g. temperature, humidity), and the like.

First of all, the rotary press according to the present invention allows for a continuous supply of pressing food material into the feeding pipe which in turn allows for a much more accurate and controllable fill level. Furthermore, the feeding speed of the feeder is (continuously) controlled to allow for a continuous supply of the pressing food material upon feedback from the sensor arrangement, i.e. based on the detected fill level such that the fill level is best kept at the defined fill level set point. Contrary to the prior art which purposely allows the fill level to vary along a large range about the sensor detection level, the present invention is focused to keep the fill level in fact at a defined fill level set point; meaning maintaining the set target, as mentioned; i.e. most accurately at or slightly about the fill level set point (e.g. between 5 and 50mm or even less about the fill level set point intended to be kept constant, preferably between 5 and 25mm, preferably between 5 and 15mm, preferably between 5 and 10mm) to thus avoid unfavorable variation in the overall fill level.

It has been found that the fill level of the pressing food material within the feeding pipe has a significant impact on the final product, i.e. the food tablet, to be pressed. This comes about since a high fill level may result in the pressing food material within the feeding pipe to be more compressed due to the feeding pipe providing the material by gravity feeding, like a too low fill level results in the pressing food material not be compacted sufficiently - e.g. having a too low density - which in turn results in a significant variation of the pressing food material fed to the press system and thus results in a significant variety of food tablet characteristics, like weight and hardness, of the food tablets being pressed. By most accurately keeping constant the fill level at a defined fill level set point, such a variation can be minimized.

Moreover, unlike commonly known pressing processes in which the press speed is controlled to allow variation or adjustment in the feeding pipe fill level, the present invention aims at controlling the feeding speed of the feeder to be controlled by the control unit to keep the fill level at the defined fill level set point. Hence, the goal of keeping the fill level (as constant as possible) at the defined fill level set point is realized by means not directly related to the pressing process (like the press speed). This may allow any press system related parameters (like press speed) be controlled (e.g. adjusted) independently from the feeding system, so that the press system, which receives the pressing food material from the feeding system in a most accurate manner, can, for instance, be run at a constant speed, e.g. at full speed or any other desired speed.

It has been found that the present invention allows for production of food tablets having a minimized weight variation, e.g. a maximum weight variation of 0.05 g per 10 g food tablet, which means a reduction of the variation in weight compared to conventional press systems of about 66% (0.05 g vs. 0.15 g). This also results in less variation in raw pressing food material which in turn results in an increased economic efficiency.

As already indicated herein above, the control unit (or another control unit) could be further configured to control the feeding speed independent from a speed of the press system. This means that the speed of the press system can be set at any desired speed to allow for a desired press result of the tablets, while the feeding speed, irrespective of a press speed and press speed control, is only controlled based on - i.e. only dependent on - the actual fill level detection to keep the fill level at a defined fill level set point. Hence, even though the actual fill level might also be dependent on the press speed, the control of the feeding speed is only dependent on the detected fill level thus also taking into consideration any other factors which may influence the actual fill level, like temperature, humidity, clogging, pressing material, etc. As already mentioned, as the speed of the press system on the one hand and the feeding speed of the feeder on the other hand are independently controllable, the required pressing food material can be provided by the feeding system in a most accurate manner, while the press system can be controlled to obtain desired food tablet characteristics or just to let the press system run at maximum or any other desired speed. The accurate provision of pressing food material thus allows for a desired/maximum output while minimizing the weight variation. A limited variation in weight of the pressing food material also has an influence on other characteristics of the food tablet, like the average hardness and the average amount of raw pressing food material used. It has also been found that a variation in press speed, like applied in the prior art to control the fill level, results in a variation of the hardness of the food tablets which may result in the food tablet not be usable for the intended purpose (e.g. bouillon cube) or more unplanned stoppages of the whole process including also wrapping of the food tablet (e.g. food cube). As the press system characteristics might be controlled (e.g. adjusted) independently from the feeding speed and thus the fill level, adverse influences resulting from a variation of these press system characteristics can be avoided. For instance, in case the composition of the Swiss Maggi bouillon is pressed with a speed of 632 tablets/min the average hardness of these tablets is 163N, and with a reduced pressing speed of 500 tablets/min the average hardness of these tablets is 276N.

The rotary press may further comprise a press control unit, which is configured to control the speed of the press system independent from the feeding speed and the detected fill level. This allows for a maximum optimization of the fill level control on the one hand and the press production control on the other hand thus resulting in food tablets having a minimized weight variation and a minimized variation in other food tablet characteristics, like hardness. The (feeding speed or feeder) control unit can comprise the press control unit. Alternatively, the press control unit and the (feeder) control unit can also be independently provided with respect to each other, wherein "independently" may simply relate to the control actions but may also relate to a physically independent layout.

The control unit can be further configured, irrespective of a speed of the press system, to keep constant the feeding speed preferably at a defined set point speed, if (or once, or when) the sensor arrangement detects the fill level to correspond to the fill level set point. This should allow to keep the fill level at a defined fill level set point in an easy and efficient way; this preferably based on a defined set point speed which may allow for a most energy-saving operation. As this is carried out irrespective of a speed of the press system, again the feeding and pressing can be controlled individually and thus allow for a most accurate production of pressed food tablets with a minimum in variation of weight and preferably further food tablet characteristics.

The control unit can be further configured, irrespective of a speed of the press system, to increase the feeding speed preferably to a (defined) first speed, if the sensor arrangement detects the fill level to be below the fill level set point, and to decrease the feeding speed preferably to a (defined) second speed, if the sensor arrangement detects the fill level to be above the fill level set point. This should allow a most accurate control of the fill level to be best kept constant at the defined fill level set point due to a quick reaction of the control unit upon potential variation in the fill level to control the feeding speed in a most accurate manner and preferably based on defined first and second speeds thus also resulting in a most efficient control of the whole pressing process.

The sensor arrangement comprises a set of at least three and more preferably at least five digital sensors. More digital sensors allow for more feeding speed control steps for the feeder. The more digital sensors are installed, the smoother and more accurate can be done the feeding speed control thus making the whole control process smoother and more accurate. The set of at least three digital sensors has a first digital sensor for detecting the fill level at the fill level set point, a second digital sensor for detecting the fill level at a defined upper fill level limit being above the fill level set point, and a third digital sensor for detecting the fill level at a defined lower fill level limit being below the fill level set point. While the use of one single digital sensor results in an economic layout of the whole sensor arrangement, the use of the at least three digital sensors results in a more accurate measuring of the fill level and can further provide security measures to avoid the fill level exceeding or dropping below predefined (abnormal) fill levels resulting, for instance, in pressed food tablets deviation from a required average characteristic like weight and hardness. The control unit thus may further be configured to detect an abnormal condition, if the upper fill level limit is exceeded (e.g. as such or for a predetermined time) and/or the lower fill level limit is undercut (e.g. as such or for predetermined time). As a result of this abnormal condition detection, the rotary press may, for instance, output a corresponding signal and/or be stopped.

The sensor arrangement may preferably comprise intermediate digital sensors for detecting a fill level between the fill level set point and the upper and/or lower fill level limit. This should allow for a more accurate control of the fill level. For instance, reaching the respective intermediate fill levels detected by the intermediate digital sensors may result in an intermediate feeding speed of the feeder be set, which intermediate feeding speed can preferably be between the constant feeding speed (e.g. the defined set point speed) and the respective feeding speed when the second or third digital sensor detects an upper or lower fill level limit of the feeding pipe; with the aim to bring the fill level back to the defined fill level set point. Hence, the first speed and/or second speed might be variable dependent on the fill level being measured by the respective digital sensors.

The control unit can be further configured, irrespective of a speed of the press system, to increase the feeding speed, preferably to a (defined) third speed higher than the first speed, if the sensor arrangement and preferably at least the third digital sensor detects the fill level to decrease, preferably to drop below the lower fill level limit, and to decrease the feeding speed preferably to a (defined) fourth speed lower than the second speed, if the sensor arrangement and preferably at least the second digital sensor detects the fill level to increase, preferably to exceed the upper fill level limit. This should allow the press system to quickly react in case of detecting an "abnormal condition" to bring back the rotary press quickly into a normal condition, i.e. the fill level back to the defined fill level set point if not able to be kept by the given conditions. Of course, if these measures may not result in the fill level getting back to the fill level set point - e.g. within a predetermined time - an "abnormal procedure" may be performed which could be output of a corresponding signal and/or the rotary press be stopped.

The upper fill level limit and the lower fill level limit preferably define a fill level detection range, i.e. a discrete detection range. This detection range preferably extends over a detection length extending between the feeder and the press system (i.e. usually in or along a vertical direction/extension) of between 20mm and 100mm, preferably between 25mm and 40mm, more preferred of about 35mm. The invention, however, is not limited to a particular length of the fill level detection range but this depends on the given circumstances of the required fill level, the length of the feeding pipe as well as the dimension of the feeding pipe and the whole system, and the overall rotary press characteristics like pressing speed and used pressing food material and the like.

Adjacent sensors of said set of sensors can be distanced from each other along a feeding direction extending between the feeder and the press system within a range of between 10mm and 40mm, preferably 15mm and 30mm, more preferred by about 18mm. In fact, the invention is not limited to a particular distance between the sensors or discrete sensing levels but the distance can be set as required dependent on the given circumstances of the rotary press. The distance between the sensors can be defined based on a required precision of the control. The further distanced are the sensors, the less precise will be the control. It has been found that a distance of 18mm results in sufficiently precise measuring, while the distance can, of course, be less or more as required. Of course, the distance is limited by the overall length of the feeding pipe.

Multiple or all of the sensors of the set of sensors can be jointly provided on or attached to a common support. This allows for an easier handling and more accurate mounting of the plurality of sensors.

The sensor arrangement can be configured such that the fill level set point can be moved relative to the feeding pipe to increase or decrease the fill level set point. Said movement can be provided by the sensor arrangement, preferably the support, be movable relative to the feeding pipe, i.e. preferably along a vertical direction. The control unit can also be configured to select any one of the sensors of the set of sensors to be the first digital sensor and thus being the sensor to detect the fill level set point. The other sensors around this sensor are then obviously defined correspondingly, i.e. one of the sensors above the selected first digital sensor is defined to be the second digital sensor while one of the sensors below the selected first digital sensor is defined to be the third digital sensor. Of course, sensors between the mentioned sensors can be selected to be intermediate digital sensors as defined herein above. The change of the fill level set point can allow the sensor arrangement to be adapted dependent on the given needs for obtaining defined pressed food tablets. Selection of different digital sensors as the first digital sensor and correspondingly the other digital sensors can allow for an easy adaptation of the fill level set point simply based on the control settings. On the other hand, a physical movement of the sensor arrangement allows for a more accurate adjustment of the fill level set point as the sensors can preferably be positioned at any desired level along the feeding length. Of course, every digital sensor can be physically movable independently from the other sensors, which would even more increase the accuracy of adjusting the detection range.

The feeding pipe may have a feeding length extending (preferably in a vertical direction) between the feeder and the press system of between 50mm and 4000mm, preferably between 100mm and 2000mm, preferably between 200mm and 1500mm, more preferred between 500mm and 1000mm, and most preferred of about 700mm. Of course, the present invention is not limited to a particular feeding length, which, however, preferably depends on the given requirements for the pressing process.

The die cavities are arranged and preferably evenly distributed about the rotational axis, preferably on the same radius. This allows for a most accurate and fast pressing process. The die cavities may have a polygonal cross-section when seen in a pressing direction of the punches, e.g. rectangular or square, for pressing a cube-shaped food tablet like a bouillon cube. Of course, the die cavities may also have another cross-section, like circular or oval.

The feeding system preferably comprises a hopper for tipping of pressing food material to the feeder. Moreover, the feeding system may further comprise a sieve, preferably being provided between the feeder and the feeding pipe to sieve the supplied pressing food material. The sieve can be provided in moveable (e.g. rotatable) or fixed manner. The sieve is preferably detachably provided. The feeding system may further comprise a press feeder for distributing the pressing food material provided by the feeding pipe to the die cavities. The press feeder can be a feeding shoe preferably having at least one or more feeding propeller(s) for distributing the pressing food material provided by the feeding pipe to the die cavities. The press feeder can be provided between the feeding pipe (e.g. preferably a (bottom) outlet of the feeding pipe) and the die cavities of the rotary die plate to allow for defined feeding of the die cavities passing the feeding pipe upon the rotational movement of the die cavities of the rotary die plate with respect to the feeding system. The feeder may comprise a screw feeder or a vibration feeder or a screen conveyor or any other kind of (material) feeder/conveyor. Moreover, a motor, like an electric motor, can be provided to run the feeder at a defined feeding speed preferably controlled by the control unit. The motor can run at desired speeds and/or in a start/stop mode; preferably by a frequency drive.

The press system can further comprise a pressing station for applying a pressing force onto the punches; i.e. on both opposite (groups of) punches in a double punch system or on the single (group of) punches in a single punch system. Moreover, the press system can further comprise a tablet discharge station for discharging the compressed food tablet, preferably in the form of a bouillon cube, e.g. by means of an ejector unit.

According to a second aspect of the present invention, there is provided a method for pressing a food tablet, like a bouillon cube, by compression of pressing food material, like a food powder, with a rotary press, the method comprising the steps of:
a) continuously supplying the pressing food material by a feeder to a feeding pipe of a feeding system of the rotary press, wherein a fill level of the pressing food material in the feeding pipe is detected by a sensor arrangement,
b) successively receiving an amount of pressing food material provided by the feeding pipe in a plurality of die cavities of a rotary die plate of a press system upon a rotational movement of the rotary die plate being drivable about a rotational axis with respect to the feeding system, and
c) producing food tablets inside the die cavities by means of punches upon the rotational movement of the rotary die plate,
wherein, upon continuous supply of the pressing food material to the feeding pipe, a feeding speed of the feeder is controlled based on the detected fill level to keep the fill level at a defined fill level set point.

The method according to the present invention allows for obtaining the advantages as already defined herein above for the rotary press and thus allows for a most accurate and resource-conserving and economically efficient method; i.e. performance of the pressing process.

The method may further comprise the step of keeping constant the feeding speed preferably at a defined set point speed, irrespective of a speed of the press system, if (or once, or when) the sensor arrangement detects the fill level to correspond to the fill level set point. Moreover, the method may further comprise the steps of increasing the feeding speed preferably to a (defined) first speed, irrespective of a speed of the press system, if the sensor arrangement detects the fill level to be below the fill level set point, and decreasing the feeding speed preferably to a (defined) second speed, irrespective of a speed of the press system, if the sensor arrangement detects the fill level to be above the fill level set point.

The sensor arrangement comprises a set of at least three digital sensors having a first digital sensor for detecting the fill level at the fill level set point, at least one second digital sensor for detecting the fill level at a defined upper fill level limit being above the fill level set point, and at least one third digital sensor for detecting the fill level at a defined lower fill level limit being below the fill level set point. Based on this, the method comprises the steps of increasing the feeding speed preferably to a (defined) third speed higher than the first speed, irrespective of a speed of the press system, if the sensor arrangement, preferably at least the third digital sensor, detects the fill level to decrease, preferably to drop below the lower fill level limit, and decreasing the feeding speed preferably to a (defined) fourth speed lower than the second speed, irrespective of a speed of the press system, if the sensor arrangement, preferably at least the second digital sensor, detects the fill level to increase, preferably to exceed the upper fill level limit.

Further features, advantages and objects of the present invention would come apparent for the skilled person when reading the following detailed description of an embodiment of the present invention, when taking in conjunction with the Figure of the enclosed drawing.

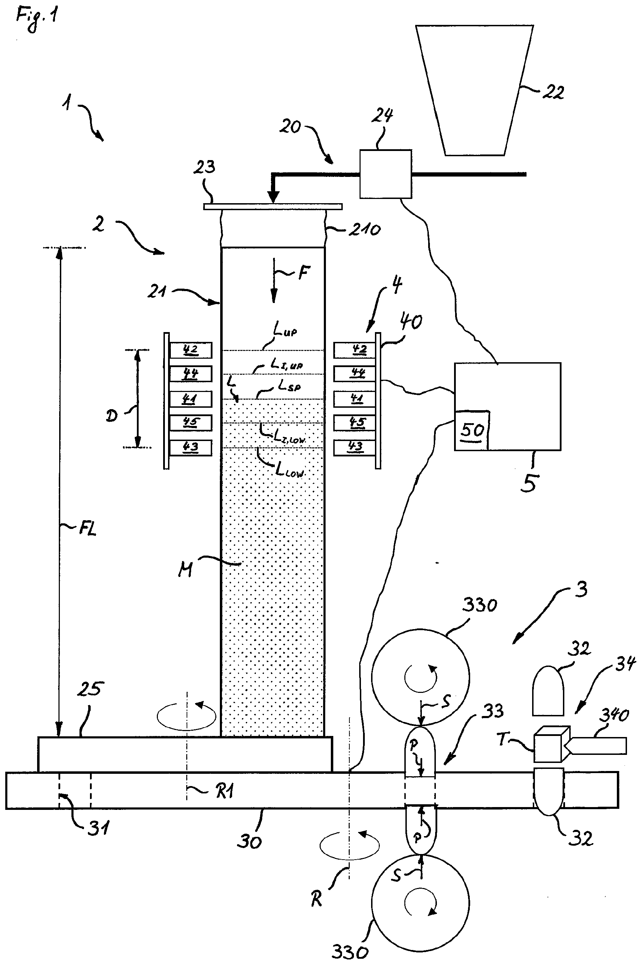

The only Figure 1 shows a simplified schematic view of a rotary press 1 for compressing a pressing food material M, like food powder, into food tablets T according to the present invention.

The rotary press 1 comprises a feeding system 2 for feeding the pressing food material M to a press system 3 of the rotary press 1 described in more detail herein below. The feeding system 2 comprises a feeder 20 for continuously supplying the pressing food material M. The feeding system 2 further comprises a feeding pipe 21 for providing the pressing food material M received from the feeder 20. The feeding pipe 21 may be of the gravity-fed supply type and thus extends substantially vertically or is substantially vertically arranged/oriented. The feeding pipe 21 may have a feeding length FL extending between the feeder 20 and the press system 3 of between 50mm and 4000mm, preferably between 100mm and 2000mm, preferably between 200mm and 1500mm, more preferred between 500mm and 1000mm, and most preferred of about 700mm. The feeding pipe 21, like all other elements of the rotary press, can be made of a food grade material, for instance a food grade plastic (e.g. polyvinylidene fluoride (PVDF)). The feeding pipe 21 vibrates or agitates. This ensures that no pressing food material M sticks to the wall.

The feeding system 2 can further comprise a hopper 22 for tipping of pressing food material M to the feeder 20. Moreover, a sieve 23, like a rotary sieve or a fixed sieve, can preferably be provided between the feeder 20 and the feeding pipe 21 to sieve the supplied pressing food material M. This sieve 23 or additional sieves can also be provided at any other desired location within the feeding passage of the pressing food material M. The feeding pipe 21 can be a rigid or flexible pipe, tube or hose or the like. The feeding pipe 21 may comprise a flexible connection section 210 to connect the feeding pipe 21 to the feeder 20 or sieve 23.

The feeder 20 may comprise a screw feeder or a vibration feeder or any other kind of feeder or conveyor. Moreover, the feeder 20 may comprise a motor 24, like an electric motor, to run the feeder 20 at a defined feeding speed which is preferably controlled by a control unit 5 of the rotary press 1, which is described in more detail herein below.

The rotary press 1 further comprises a press system 3. The press system 3 comprises a rotary die plate 30 being drivable about a rotational axis R. The die plate 30 comprises a plurality of die cavities 31 (i.e. volumetric filling dies or dices; in Fig. 1, there are schematically shown only three die cavities 31 for clarity reasons) for successively receiving an amount of pressing food material M provided by the feeding pipe 21 and to produce food tablets T inside the die cavities 31 by means of punches 32 upon a rotational movement of the die cavities 31 of the rotary die plate 30 about the rotational axis R and with respect to the feeding system 2. In Fig. 1, only two pairs of punches 32 are shown for clarity reasons, while usually every die cavity 31 is provided with a pair of punches 32 which are usually guided within a guide groove extending about the rotational axis R, respectively, to move the punches towards and away from the die cavity 31 or with respect to each other. Fig. 1 shows a double punch system while the application is not limited to such press systems 3. For instance, the press system 3 can also be a single punch system having only one punch per die cavity. The group of single punches is then provided on one side of the die plate. The side of the through-hole forming the die cavity being opposite the single punch is closed by a static counter pressure plate (e.g. a closed bottom of the die cavity) to counter the pressing force of the single punch when the single punch is moved into/inside the die cavity and towards the counter pressure plate for compressing the pressing material.

There may further be provided a press feeder (or material distributor) 25 for distributing the pressing food material M provided by the feeding pipe 21 to the die cavities 31. Therefore, the press feeder 25 may be a feeding shoe preferably having at least one feeding propeller (not shown but commonly known in the technical field of rotary presses) preferably being rotatable about a rotational axis R1 for distributing the pressing food material M provided by the feeding pipe 21 to the die cavities 31. The press feeder 25 is preferably provided between the feeding pipe 21 (e.g. preferably a (bottom) outlet of the feeding pipe) and the die cavities 31 of the rotary die plate 30 to allow for defined feeding of the die cavities 31 passing the feeding pipe 21 upon the rotational movement of the die cavities 31 of the rotary die plate 30 about the rotational axis R and with respect to the feeding system 2.

The press system 3 can comprise a pressing station 33 for applying a pressing force S onto the punches 32. Therefore, there may be provided compression rolls 330 by means of which a dedicated pressing force S is applied onto the punches 32 to apply a corresponding pressing force on the pressing food material M to produce the food tablet T. Moreover, the press system 3 may further comprise a tablet discharge station 34 for discharging the compressed food tablet T, preferably in the form of a bouillon cube. Therefore, an ejector unit 340 may be provided to eject the produced food tablet T.

The die cavities 31 are preferably arranged and more preferred evenly distributed about the rotational axis R. In a preferred embodiment, the die cavities 31 have a polygonal cross-section when seen in a pressing direction P of the punches 32, e.g. rectangular or square, for pressing a cube-like food tablet T like a bouillon cube.

The rotary press 1 further comprises a sensor arrangement 4 for detecting the fill level L of the pressing food material M in the feeding pipe 21. The sensor arrangement 4 comprises a set of at least three and preferably at least five digital sensors 41-45. Adjacent sensors of said set of sensors 41-45 can be distanced from each other along a feeding direction F extending between the feeder 20 and the press system 3 within a range of between 10mm and 40mm, preferably 15mm and 30mm, more preferred by about 18mm. Multiple or all of the sensors 41-45 of said set of sensors can be jointly provided on or attached to a common support 40, which is preferably moveable along the feeding pipe and/or detachably provided.

According to the invention, the digital sensors 41-45 are LED infrared sensors preferably able to measure through opaque materials (e.g. plastic); i.e. materials of which the feeding pipe 21 is preferably made. The digital sensors 41-45 may consist of one transmitter and one receiver, respectively, preferably being provided on opposite sides of the feeding pipe 21 at the same level, as shown in Fig. 1, to perform a detection of pressing food material M inside the feeding pipe 21. The transmitter and receiver of one digital sensor 41-45 can be provided on or attached to the same sensor support and preferably the common support 40. The digital sensors can preferably be fed with 24V DC. The sensor output can thus be 0 or 24V. Just as an example for such a sensor 41-45, it is referred to the specific model PX-H72 of Keyence which may be connected to amplifier PX-10CP of Keyence. Of course, any other (type of) sensors preferably with the same functionality can be used.

The rotary press 1 further comprises a control unit 5 configured to control a feeding speed of the feeder 20 (e.g. the motor speed of the motor 24 mentioned herein above) for continuously supplying the press food material M based on the detected fill level L to keep the fill level L at a defined fill level set point L_{SP}. In a preferred embodiment, the control unit 5 can be configured to control the feeding speed independent from a speed of the press system 3. The control unit 5 can be programmable, e.g. with a specific algorithm, to allow for a defined control of the feeding speed.

The rotary press 1 can further comprise a press control unit 50 configured to control the speed of the press system 3 independent from the feeding speed and detected fill level L. The control unit 5 may comprise the press control unit 50 as schematically indicated in Fig. 1. However, the press control unit 50 can also be independently provided with respect to the control unit 5.

The control unit 5 can be configured, irrespective of a speed of the press system 3, to keep constant the feeding speed preferably at a defined set point speed, if (or once, or when) the sensor arrangement 4 detects the fill level L to correspond to the fill level set point L_{SP}.

The control unit 5 can be further configured, irrespective of a speed of the press system 3, to increase the feeding speed preferably to a (defined) first speed, if the sensor arrangement 4 detects the fill level L to be below the fill level set point L_{SP}, and to decrease the feeding speed preferably to a (defined) second speed, if the sensor arrangement 4 detects the fill level L to be above the fill level set point L_{SP}.

As already mentioned herein above, the sensor arrangement 4 comprises a set of at least three digital sensors 41-45. This set of sensors 41-45 comprises a first digital sensor 41 for detecting the fill level L at the fill level set point L_{SP}, a second digital sensor 42 for detecting the fill level L at a defined upper fill level limit L_{UP} being above the fill level set point L_{SP}, and a third digital sensor 43 for detecting the fill level L at a defined lower fill level limit L_{LOW} being below the fill level set point L_{SP}. The sensor arrangement 4 preferably further comprises intermediate digital sensors 44, 45 for detecting a fill level L_{I,UP}, L_{I,LOW} between the fill level set point L_{SP} and the upper and/or lower fill level limit L_{UP}, L_{LOW}. For instance, reaching the respective intermediate fill levels L_{I,UP}, L_{I,LOW} detected by the intermediate digital sensors 44, 45 may result in an intermediate feeding speed of the feeder 20 be set, which intermediate feeding speed can preferably be between the constant feeding speed (e.g. the defined set point speed) and the respective feeding speed when the second or third digital sensor 42, 43 detects an upper or lower fill level limit L_{UP}, L_{LOW} within the feeding pipe 21. Hence, the first speed and/or second speed might be variable dependent on the fill level L being measured by the respective digital sensors 41-45.

The control unit 5 can also be configured, irrespective of a speed of the press system 3, to increase the feeding speed, preferably to a (defined) third speed higher than the first speed, if the sensor arrangement 4, preferably at least the third digital sensor 43, detects the fill level L to decrease, preferably to drop below the lower fill level limit L_{LOW}, and to decrease the feeding speed, preferably to a (defined) fourth speed lower than the second speed, if the sensor arrangement 4, preferably at least the second digital sensor 42, detects the fill level L to increase, preferably to exceed the upper fill level limit L_{UP}.

The upper fill level limit L_{UP} and the lower fill level limit L_{LOW} define a fill level detection range D, which preferably extends over a detection length extending between the feeder 20 and the press system 3 of between 20mm and 100mm, preferably between 25mm and 40mm, and more preferred of a about 35mm. Due to the use of digital sensors 41-45, the detection range is a "discrete detection range".

In a preferred embodiment, the sensor arrangement 4 is configured such that the fill level set point L_{SP} can be moved relative to the feeding pipe 21 to increase or decrease the fill level set point L_{SP}. Such an adjustment or movement of the fill level set point L_{SP} can be achieved in different ways. For instance, said movement can be provided by the sensor arrangement 4, preferably the support 40, be moveable relative to the feeding pipe 21; here in a vertical direction, i.e. along the feeding pipe 21 or its longitudinal extension or its feeding length FL or the feeding direction F. It is also possible that the control unit 5 is configured to select any one of the sensor 41-45 to be the first digital sensor. In this case, the corresponding other digital sensors are respectively defined as the second digital sensor(s), the third digital sensor(s) and/or the intermediate digital sensor(s), if any.

In the following, a method for pressing a food tablet T, like a bouillon cube, by compression of the pressing food material M, like a food powder, with a rotary press 1 (e.g. a rotary press 1 according to the present invention) is described in detail.

In a first step, the pressing food material M is continuously supplied by the feeder 20 to the feeding pipe 21 of the feeding system 2 of the rotary press 1. The fill level L of the pressing food material M in the feeding pipe 21 is detected by the sensor arrangement 4 during the continuous supply of the pressing food material M.

In a second step, an amount of pressing food material M provided by the feeding pipe 21 is successively received in the plurality of die cavities 31 of the rotary die plate 30 of the press system 3 upon a rotational movement of the rotary die plate 30 being drivable about the rotational axis R with respect to the feeding system 2.

In a third step, food tablets T are produced inside the die cavities 31 by means of punches 32 upon the rotational movement of the rotary die plate 30 about the rotational axis R, preferably in the pressing station 33. After being produced, the food tablets T can be ejected in a discharge station 34 preferably by means of an ejector unit 340 for ejecting the produced food tablets T.

Upon the continuous supply of the pressing food material M to the feeding pipe 21, a feeding speed of the feeder 20 is controlled based on the detected fill level L to keep the fill level L at a defined fill level set point L_{SP}.

The method may further comprise the step of keeping constant the feeding speed preferably at a defined set point speed, irrespective of a speed of the press system 3, if (or once, or when) the sensor arrangement 4 detects the fill level L to correspond to the fill level set point L_{SP}.

The method comprises the steps of increasing the feeding step preferably to a (defined) first speed, irrespective of a speed of the press system 3, if the sensor arrangement 4 detects the fill level L to be below the fill level set point L_{SP}, and decreasing the feeding speed preferably to a (defined) second speed, irrespective of a speed of the press system 3, if the sensor arrangement 4 detects the fill level L to be above the fill level set point L_{SP}.

In case the sensor arrangement 4 comprises the set of at least three digital sensors 41-45, the method comprise the steps of increasing the feeding speed, preferably to a (defined) third speed higher than the first speed, irrespective of a speed of the press system 3, if the sensor arrangement 4, preferably at least the third digital sensor 43, detects the fill level L to decrease, preferably to drop below the lower fill level limit L_{LOW}, and decreasing the feeding speed preferably to a (defined) fourth speed lower than the second speed, irrespective of a speed of the press system 3, if the sensor arrangement 4, preferably at least the second digital sensor 42, detects the fill level L to increase, preferably to exceed the upper fill level limit L_{UP}.

Different kind of sensors have been tested and the LED infrared sensors are most accurate to detect the fill level of the food material. Capacitive sensors are not as precise for food materials as LED infrared sensors. Within different food materials the dielectric constant is changing affecting how well the sensor is detection the material. To get better measurements the sensors need to have a bigger size to send and receive a corresponding signal. These big capacitive sensors are technical more difficult to implement as LED infrared sensors. The use of paddle sensors is as well not possible for this application due to the sticky food material. The food material sticks to the sensor giving a fake detection signal. Even a radar sensor was not precise since it was detecting the dust of the food material.

The following table shows the relative weight variation of a 10g food tablet.

| **Sensor type** | Weight variation of a 10g food tablet |
|---|---|
| No sensor | 0.15g |
| 2 infrared digital sensor | 0.08g |
| 3 infrared digital sensor | 0.05g |
| 5 infrared digital sensor | 0.03g |
| Capacitive sensors | 0.12g |
| Paddle sensors | n.a. after longer time due to stickiness of food material at sensor |
| Radar sensor | 0.10g |

The present invention is not limited by the embodiment as described herein above, as long as being covered by the appended claims. All the features of the embodiment described herein above can be combined in any possible way and can be interchangeably provided as long as being covered by the scope of protection defined by the appended claims.

## Claims

1. Rotary press (1) for compressing a pressing food material (M), like food powder, into food tablets (T), comprising:
• a feeding system (2) comprising a feeder (20) for continuously supplying the pressing food material (M) and a feeding pipe (21) for providing the pressing food material (M) received from the feeder (20),
• a press system (3) comprising a rotary die plate (30) being drivable about a rotational axis (R) and comprising a plurality of die cavities (31) for successively receiving an amount of pressing food material (M) provided by the feeding pipe (21) and to produce food tablets (T) inside the die cavities (31) by means of punches (32) upon a rotational movement of the die cavities (31) of the rotary die plate (30) with respect to the feeding system (2),
• a sensor arrangement (4) for detecting a fill level (L) of the pressing food material (M) in the feeding pipe (21), and
• a control unit (5) configured to control a feeding speed of the feeder (20) for continuously supplying the pressing food material (M) based on the detected fill level (L) to keep the fill level (L) at a defined fill level set point (L_{SP});
wherein the sensor arrangement (4) comprises at least three digital sensors (41-45) having a first digital sensor (41) for detecting the fill level (L) at the fill level set point (L_{SP}), a second digital sensor (42) for detecting the fill level (L) at a defined upper fill level limit (L_{UP}) being above the fill level set point (L_{SP}), and a third digital sensor (43) for detecting the fill level (L) at a defined lower fill level limit (L_{LOW}) being below the fill level set point (L_{SP}) and wherein the digital sensors (41-45) are LED infrared sensors.

2. Rotary press (1) according to any one of the preceding claims, further comprising a press control unit (50) configured to control the speed of the press system (3) independent from the feeding speed and the detected fill level (L), wherein the control unit (5) comprises the press control unit (50).

3. Rotary press (1) according to any one of the preceding claims, wherein the control unit (5) is configured, irrespective of a speed of the press system (3), to keep constant the feeding speed preferably at a defined set point speed, if the sensor arrangement (4) detects the fill level (L) to correspond to the fill level set point (L_{SP}).

4. Rotary press (1) according to any one of the preceding claims, wherein the control unit (5) is configured, irrespective of a speed of the press system (3), to increase the feeding speed preferably to a first speed, if the sensor arrangement (4) detects the fill level (L) to be below the fill level set point (LSP), and to decrease the feeding speed preferably to a second speed, if the sensor arrangement (4) detects the fill level (L) to be above the fill level set point (LSP).

5. Rotary press (1) according to any one of the preceding claims, wherein the sensor arrangement (4) further comprises intermediate digital sensors (44, 45) for detecting a fill level (L_{I,UP}), (L_{I,LOW}) between the fill level set point (L_{SP}) and the upper and/or lower fill level limit (L_{UP}, L_{LOW}),
wherein the control unit (5) is configured, irrespective of a speed of the press system (3), to increase the feeding speed, preferably to a third speed higher than the first speed, if the sensor arrangement (4), preferably at least the third digital sensor (43), detects the fill level (L) to decrease, preferably to drop below the lower fill level limit (L_{LOW}), and to decrease the feeding speed, preferably to a fourth speed lower than the second speed, if the sensor arrangement (4), preferably at least the second digital sensor (42), detects the fill level (L) to increase, preferably to exceed the upper fill level limit (L_{UP}).

6. Rotary press (1) according to any one of the preceding claims, wherein the upper fill level limit (L_{UP}) and the lower fill level limit (L_{LOW}) define a fill level detection range (D), which preferably extends over a detection length extending between the feeder (20) and the press system (3) of between 20mm and 100mm, preferably between 25mm and 40mm, more preferred of about 35mm.

7. Rotary press (1) according to any one of the preceding claims, wherein
• adjacent sensors of said set of sensors are distanced from each other along a feeding direction (F) extending between the feeder (20) and the press system (3) within a range of between 10mm to 40mm, preferably 15mm to 30mm, more preferred by 18mm, and/or
• multiple or all of the sensors of said set of sensors are jointly provided on or attached to a common support (40).

8. Rotary press (1) according to any one of the preceding claims, wherein the sensor arrangement (4) is configured such that the fill level set point (L_{SP}) can be moved relative to the feeding pipe (21) to increase or decrease the fill level set point (L_{SP}), wherein said movement is provided by the sensor arrangement (4), preferably the support (40), be moveable relative to the feeding pipe (21) and/or the control unit (5) being configured to select any one of the sensors of the set of sensors to be the first digital sensor.

9. Rotary press (1) according to any one of the preceding claims, wherein the feeding pipe (21) has a feeding length (FL) extending between the feeder (20) and the press system (3) of between 50mm and 4,000mm, preferably between 100mm and 2,000mm, preferably between 200mm and 1,500mm, more preferred between 500mm and 1,000mm, and most preferred of 700mm.

10. Rotary press (1) according to any one of the preceding claims, wherein the feeding pipe 21 vibrates or agitates.

11. Rotary press (1) according to any one of the preceding claims, wherein the die cavities (31) are arranged and preferably evenly distributed about the rotational axis (R), and/or
wherein the die cavities (31) have a polygonal cross section when seen in a pressing direction (P) of the punches (32), e.g. rectangular or square, for pressing a bouillon cube or bouillon tablet.

12. Rotary press (1) according to any one of the preceding claims,
wherein the feeding system (2) further comprises:
• a hopper (22) for tipping of pressing food material (M) to the feeder (20), and
• a sieve (23) being provided between the feeder (20) and the feeding pipe (21) to sieve the supplied pressing food material (M), the sieve (23) preferably being moveable or fixed, and
• a press feeder (25), like a feeding shoe preferably having a feeding propeller, for distributing the pressing food material (M) provided by the feeding pipe (21) to the die cavities (31), being provided between the feeding pipe (21) and the die cavities (31) of the rotary die plate (30) to allow for defined feeding of the die cavities (31) passing the feeding pipe (21) upon the rotational movement of the die cavities (31) of the rotary die plate (30) with respect to the feeding system (2), and/or wherein the feeder (20) comprises a screw or vibration feeder, and/or an electric motor (24) to run the feeder (20) at a defined feeding speed controlled by the control unit (5), and
wherein the press system (3) further comprises:
• a pressing station (33) for applying a pressing force (S) onto the punches (32), and
• a tablet discharge staion (34) for discharging the compressed food tablet (T), preferably a bouillon cube or bouillon tablet.

13. Method for pressing a food tablet (T), like a bouillon cube, by compression of a pressing food material (M), like a food powder, with a rotary press (1), the method comprising the steps of:
a) continuously supplying the pressing food material (M) by a feeder (20) to a feeding pipe (21) of a feeding system (2) of the rotary press (1), wherein a fill level (L) of the pressing food material (M) in the feeding pipe (21) is detected by a sensor arrangement (4),
b) successively receiving an amount of pressing food material (M) provided by the feeding pipe (21) in a plurality of die cavities (31) of a rotary die plate (30) of a press system (3) upon a rotational movement of the rotary die plate (30) being drivable about a rotational axis (R) with respect to the feeding system (2), and
c) producing food tablets (T) inside the die cavities (31) by means of punches (32) upon the rotational movement of the rotary die plate (30), wherein, upon continuous supply of the pressing food material (M) to the feeding pipe (21), a feeding speed of the feeder (20) is controlled based on the detected fill level (L) to keep the fill level (L) at a defined fill level set point (L_{SP}) and wherein the sensor arrangement (4) comprises a set of at least three digital sensors (41-45) having a first digital sensor (41) for detecting the fill level (L) at the fill level set point (L_{SP}), at least one second digital sensor (42) for detecting the fill level (L) at a defined upper fill level limit (L_{UP}) being above the fill level set point (L_{SP}), and at least one third digital sensor (43) for detecting the fill level (L) at a defined lower fill level limit (L_{LOW}) being below the fill level set point (L_{SP}), the method further comprising the steps of:
increasing the feeding speed preferably to a third speed higher than the first speed, irrespective of a speed of the press system (3), if the sensor arrangement (4), preferably at least the third digital sensor (43), detects the fill level (L) to decrease, preferably to drop below the lower fill level limit (L_{LOW}), and decreasing the feeding speed preferably to a fourth speed lower than the second speed, irrespective of a speed of the press system (3), if the sensor arrangement (4), preferably at least the second digital sensor (42), detects the fill level (L) to increase, preferably to exceed the upper fill level limit (L_{UP}) and wherein the digital sensors (41-45) are LED infrared sensors .

14. Method according to claim 13, wherein the feeding pipe 21 vibrates or agitates.

## Patentansprüche

1. Rotationspresse (1) zum Komprimieren eines Pressnahrungsmittelmaterials (M), wie Nahrungsmittelpulver, in Nahrungsmitteltabletten (T), umfassend:
• ein Zuführsystem (2), umfassend eine Zuführvorrichtung (20) zum kontinuierlichen Zuleiten des Pressnahrungsmittelmaterials (M) und ein Zuführrohr (21) zum Bereitstellen des Pressnahrungsmittelmaterials (M), das von der Zuführvorrichtung (20) erhalten wird,
• ein Presssystem (3), umfassend eine Rotationsmatrizenscheibe (30), die um eine Rotationsachse (R) herum antreibbar ist und umfassend eine Vielzahl von Matrizenhohlräumen (31) zum nacheinander Erhalten einer Menge von Pressnahrungsmittelmaterial (M), das durch das Zuführrohr (21) bereitgestellt wird, und um Nahrungsmitteltabletten (T) innerhalb der Matrizenhohlräume (31) mittels Stempeln (32) bei einer Rotationsbewegung der Matrizenhohlräume (31) der Rotationsmatrizenscheibe (30) hinsichtlich des Zuführsystems (2) zu erzeugen,
• eine Sensoranordnung (4) zum Erfassen eines Füllstands (L) des Pressnahrungsmittelmaterials (M) in dem Zuführrohr (21) und
• eine Steuereinheit (5), die konfiguriert ist, um eine Zuführgeschwindigkeit der Zuführvorrichtung (20) zum kontinuierlichen Zuleiten des Pressnahrungsmittelmaterials (M) basierend auf dem erfassten Füllstand (L) zu steuern, um den Füllstand (L) bei einem definierten Füllstandssollwert (L_{SP}) zu halten;
wobei die Sensoranordnung (4) mindestens drei digitale Sensoren (41-45), die einen ersten digitalen Sensor (41) zum Erfassen des Füllstands (L) bei dem Füllstandssollwert (L_{SP}), einen zweiten digitalen Sensor (42) zum Erfassen des Füllstands (L) bei einer definierten oberen Füllstandsgrenze (L_{UP}), die über dem Füllstandssollwert (L_{SP}) liegt, und einen dritten digitalen Sensor (43) zum Erfassen des Füllstands (L) bei einer definierten unteren Füllstandsgrenze (L_{LOW}), die unterhalb des Füllstandssollwerts (L_{SP}) liegt, umfasst und wobei die digitalen Sensoren (41-45) LED-Infrarotsensoren sind.

2. Rotationspresse (1) nach einem der vorstehenden Ansprüche, ferner umfassend eine Presssteuereinheit (50), die konfiguriert ist, um die Geschwindigkeit des Presssystems (3) unabhängig von der Zuführgeschwindigkeit und dem erfassten Füllstand (L) zu steuern, wobei die Steuereinheit (5) die Presssteuereinheit (50) umfasst.

3. Rotationspresse (1) nach einem der vorstehenden Ansprüche, wobei die Steuereinheit (5) konfiguriert ist, ungeachtet einer Geschwindigkeit des Presssystems (3), um die Zuführgeschwindigkeit vorzugsweise bei einer definierten Sollwertgeschwindigkeit konstant zu halten, falls die Sensoranordnung (4) erfasst, dass der Füllstand (L) dem Füllstandssollwert (L_{SP}) entspricht.

4. Rotationspresse (1) nach einem der vorstehenden Ansprüche, wobei die Steuereinheit (5) konfiguriert ist, ungeachtet einer Geschwindigkeit des Presssystems (3), um die Zuführgeschwindigkeit vorzugsweise auf eine erste Geschwindigkeit zu erhöhen, falls die Sensoranordnung (4) erfasst, dass der Füllstand (L) unterhalb des Füllstandssollwerts (L_{SP}) liegt, und um die Zuführgeschwindigkeit vorzugsweise auf eine zweite Geschwindigkeit zu verringern, falls die Sensoranordnung (4) erfasst, dass die Füllhöhe (L) über dem Füllstandssollwert (L_{SP}) liegt.

5. Rotationspresse (1) nach einem der vorstehenden Ansprüche, wobei die Sensoranordnung (4) ferner dazwischenliegende digitale Sensoren (44, 45) zum Erfassen eines Füllstands (L_{I,UP}), (L_{I,LOW}) zwischen dem Füllstandssollwert (L_{SP}) und der oberen und/oder der unteren Füllstandsgrenze (L_{UP}, L_{LOW}) umfasst,
wobei die Steuereinheit (5) konfiguriert ist, ungeachtet einer Geschwindigkeit des Presssystems (3), um die Zuführgeschwindigkeit zu erhöhen, vorzugsweise auf eine dritte Geschwindigkeit, die höher als die erste Geschwindigkeit ist, falls die Sensoranordnung (4), vorzugsweise mindestens der dritte digitale Sensor (43), erfasst, dass sich der Füllstand (L) verringert, vorzugsweise unterhalb der unteren Füllstandsgrenze (L_{LOW}) sinkt, und um die Zuführgeschwindigkeit zu verringern, vorzugsweise auf eine vierte Geschwindigkeit, die niedriger als die zweite Geschwindigkeit ist, falls die Sensoranordnung (4), vorzugsweise mindestens der zweite digitale Sensor (42), erfasst, dass sich der Füllstand (L) erhöht, vorzugsweise die obere Füllstandsgrenze (L_{UP}) überschreitet.

6. Rotationspresse (1) nach einem der vorstehenden Ansprüche, wobei die obere Füllstandsgrenze (L_{UP}) und die untere Füllstandsgrenze (L_{LOW}) einen Füllstandserfassungsbereich (D) definieren, der sich vorzugsweise über eine Erfassungslänge, die sich zwischen der Zuführvorrichtung (20) und dem Presssystem (3) erstreckt, von zwischen 20 mm und 100 mm, vorzugsweise zwischen 25 mm und 40 mm, mehr bevorzugt von etwa 35 mm erstreckt.

7. Rotationspresse (1) nach einem der vorstehenden Ansprüche, wobei
• angrenzende Sensoren des Satzes von Sensoren entlang einer Zuführrichtung (F), die sich zwischen der Zuführvorrichtung (20) und dem Presssystem (3) erstreckt, innerhalb eines Bereichs von zwischen 10 mm bis 40 mm, vorzugsweise 15 mm bis 30 mm, mehr bevorzugt um 18 mm voneinander beabstandet sind und/oder
• mehrere oder alle der Sensoren des Satzes von Sensoren an einem gemeinsamen Träger (40) zusammen bereitgestellt oder an diesem befestigt sind.

8. Rotationspresse (1) nach einem der vorstehenden Ansprüche, wobei die Sensoranordnung (4) derart konfiguriert ist, dass der Füllstandssollwert (L_{SP}) bezüglich des Zuführrohrs (21) bewegt werden kann, um den Füllstandssollwert (L_{SP}) zu erhöhen oder zu verringern, wobei die Bewegung dadurch bereitgestellt wird, dass die Sensoranordnung (4), vorzugsweise der Träger (40), bezüglich des Zuführrohrs (21) bewegbar ist und/oder die Steuereinheit (5) konfiguriert ist, um einen beliebigen der Sensoren des Satzes von Sensoren auszuwählen, um der erste digitale Sensor zu sein.

9. Rotationspresse (1) nach einem der vorstehenden Ansprüche, wobei das Zuführrohr (21) eine Zuführlänge (FL), die sich zwischen der Zuführvorrichtung (20) und dem Presssystem (3) erstreckt, von zwischen 50 mm und 4.000 mm, vorzugsweise zwischen 100 mm und 2.000 mm, vorzugsweise zwischen 200 mm und 1.500 mm, mehr bevorzugt zwischen 500 mm und 1.000 mm und am meisten bevorzugt von 700 mm aufweist.

10. Rotationspresse (1) nach einem der vorstehenden Ansprüche, wobei das Zuführrohr 21 vibriert oder sich schüttelt.

11. Rotationspresse (1) nach einem der vorstehenden Ansprüche, wobei die Matrizenhohlräume (31) um die Rotationsachse (R) herum angeordnet und vorzugsweise um diese herum gleichmäßig verteilt sind und/oder
wobei die Matrizenhohlräume (31) einen polygonalen Querschnitt, wenn in einer Pressrichtung (P) der Stempel (32) betrachtet, z. B. rechteckig oder quadratisch, zum Pressen eines Bouillonwürfels oder einer Bouillontablette aufweisen.

12. Rotationspresse (1) nach einem der vorstehenden Ansprüche,
wobei das Zuführsystem (2) ferner umfasst:
• einen Trichter (22) zum Kippen von Nahrungsmittelmaterial (M) zu der Zuführvorrichtung (20) und
• ein Sieb (23), das zwischen der Zuführvorrichtung (20) und dem Zuführrohr (21) bereitgestellt wird, um das zugeleitete Pressnahrungsmittelmaterial (M) zu sieben, wobei das Sieb (23) vorzugsweise bewegbar oder fixiert ist und
• eine Presszuführvorrichtung (25), wie einen Zuführschuh, der vorzugsweise einen Zuführpropeller aufweist, zum Verteilen des Pressnahrungsmittelmaterials (M), das durch das Zuführrohr (21) bereitgestellt wird, auf die Matrizenhohlräume (31), die zwischen dem Zuführrohr (21) und den Matrizenhohlräumen (31) der Rotationsmatrizenscheibe (30) bereitgestellt wird, um ein definiertes Zuführen an die Matrizenhohlräume (31), die das Zuführrohr (21) bei der Rotationsbewegung der Matrizenhohlräume (31) der Rotationsmatrizenscheibe (30) hinsichtlich des Zuführsystems (2) passieren, zu ermöglichen und/oder wobei die Zuführvorrichtung (20) eine Schnecken- oder Vibrationszuführvorrichtung und/oder einen Elektromotor (24) umfasst, um die Zuführvorrichtung (20) bei einer definierten Zuführgeschwindigkeit, die durch die Steuereinheit (5) gesteuert wird, zu betreiben und
wobei das Presssystem (3) ferner umfasst:
• eine Pressstation (33) zum Aufbringen einer Presskraft (S) auf die Stempel (32) und
• eine Tablettenausstoßstation (34) zum Ausstoßen der komprimierten Nahrungsmitteltablette (T), vorzugsweise einen Bouillonwürfel oder eine Bouillontablette.

13. Verfahren zum Pressen einer Nahrungsmitteltablette (T), wie einen Bouillonwürfel, durch Komprimierung eines Pressnahrungsmittelmaterials (M), wie ein Nahrungsmittelpulver, mit einer Rotationspresse (1), das Verfahren umfassend die Schritte:
a) kontinuierliches Zuleiten des Pressnahrungsmittelmaterials (M) durch eine Zuführvorrichtung (20) zu einem Zuführrohr (21) eines Zuführsystems (2) der Rotationspresse (1), wobei ein Füllstand (L) des Pressnahrungsmittelmaterials (M) in dem Zuführrohr (21) durch eine Sensoranordnung (4) erfasst wird,
b) nacheinander Erhalten einer Menge von Pressnahrungsmittelmaterial (M), das durch das Zuführrohr (21) bereitgestellt wird, in einer Vielzahl von Matrizenhohlräumen (31) einer Rotationsmatrizenscheibe (30) eines Presssystems (3) bei einer Rotationsbewegung der Rotationsmatrizenscheibe (30), die um eine Rotationsachse (R) herum hinsichtlich des Zuführsystems (2) antreibbar ist, und
c) Herstellen von Nahrungsmitteltabletten (T) innerhalb der Matrizenhohlräume (31) mittels Stempeln (32) bei der Rotationsbewegung der Rotationsmatrizenscheibe (30), wobei, bei einer kontinuierlichen Zuleitung des Pressnahrungsmittelmaterials (M) zu dem Zuführrohr (21), eine Zuführgeschwindigkeit der Zuführvorrichtung (20) basierend auf dem erfassten Füllstand (L) gesteuert wird, um den Füllstand (L) bei einem definierten Füllstandssollwert (L_{SP}) zu halten und wobei die Sensoranordnung (4) einen Satz von mindestens drei digitalen Sensoren (41-45) umfasst, der einen ersten digitalen Sensor (41) zum Erfassen des Füllstands (L) bei dem Füllstandssollwert (L_{SP}), mindestens einen zweiten digitalen Sensor (42) zum Erfassen des Füllstands (L) bei einer definierten oberen Füllstandsgrenze (L_{UP}), die über dem Füllstandssollwert (L_{SP}) liegt, und mindestens einen dritten digitalen Sensor (43) zum Erfassen des Füllstands (L) bei einer definierten unteren Füllstandsgrenze (L_{LOW}), die unterhalb des Füllstandssollwerts (L_{SP}) liegt, aufweist, das Verfahren ferner umfassend die Schritte:
Erhöhen der Zuführgeschwindigkeit, vorzugsweise auf eine dritte Geschwindigkeit, die höher als die erste Geschwindigkeit ist, ungeachtet einer Geschwindigkeit des Presssystems (3), falls die Sensoranordnung (4), vorzugsweise mindestens der dritte digitale Sensor (43), erfasst, dass sich der Füllstand (L) verringert, vorzugsweise unterhalb der unteren Füllstandsgrenze (L_{LOW}) sinkt, und Verringern der Zuführgeschwindigkeit vorzugsweise auf eine vierte Geschwindigkeit, die niedriger als die zweite Geschwindigkeit ist, ungeachtet einer Geschwindigkeit des Presssystems (3), falls die Sensoranordnung (4), vorzugsweise mindestens der zweite digitale Sensor (42), erfasst, dass sich der Füllstand (L) erhöht, vorzugsweise die obere Füllstandsgrenze (L_{UP}) überschreitet, und wobei die digitalen Sensoren (41-45) LED-Infrarotsensoren sind.

14. Verfahren nach Anspruch 13, wobei das Zuführrohr 21 vibriert oder sich schüttelt.

## Revendications

1. Presse rotative (1) permettant de comprimer une matière (M) alimentaire de pressage, comme de la poudre alimentaire, en des comprimés alimentaires (T), comprenant :
• un système d'alimentation (2) comprenant un dispositif d'alimentation (20) pour alimenter en continu la matière (M) alimentaire de pressage et un tuyau d'alimentation (21) pour fournir la matière (M) alimentaire de pressage reçu à partir du dispositif d'alimentation (20),
• un système de presse (3) comprenant un plateau de matrice rotatif (30) pouvant être entraîné autour d'un axe de rotation (R) et comprenant une pluralité de cavités de matrice (31) pour recevoir successivement une quantité de matière (M) alimentaire de pressage fournie par le tuyau d'alimentation (21) et pour produire des comprimés alimentaires (T) à l'intérieur des cavités de matrice (31) au moyen de poinçons (32) lors d'un déplacement en rotation des cavités de matrice (31) du plateau de matrice rotatif (30) par rapport au système d'alimentation (2),
• un agencement de capteurs (4) pour détecter un niveau de remplissage (L) de la matière (M) alimentaire de pressage dans le tuyau d'alimentation (21), et
• une unité de commande (5) configurée pour commander une vitesse d'alimentation du dispositif d'alimentation (20) pour alimenter en continu la matière (M) alimentaire de pressage en fonction du niveau de remplissage (L) détecté pour maintenir le niveau de remplissage (L) au niveau d'un point de consigne de niveau de remplissage (L_{SP}) défini ;
dans laquelle l'agencement de capteurs (4) comprend au moins trois capteurs numériques (41-45) ayant un premier capteur numérique (41) pour détecter le niveau de remplissage (L) au niveau du point de consigne de niveau de remplissage (L_{SP}), un deuxième capteur numérique (42) pour détecter le niveau de remplissage (L) au niveau d'une limite de niveau de remplissage supérieure définie (L_{UP}) étant au-dessus du point de consigne de niveau de remplissage (L_{SP}),et un troisième capteur numérique (43) pour détecter le niveau de remplissage (L) au niveau d'une limite de niveau de remplissage inférieure (L_{LOW}) définie étant inférieure au point de consigne de niveau de remplissage (L_{SP}) et dans laquelle les capteurs numériques (41-45) sont des capteurs infrarouges à DEL.

2. Presse rotative (1) selon l'une quelconque des revendications précédentes, comprenant en outre une unité de commande de presse (50) configurée pour commander la vitesse du système de presse (3) indépendamment de la vitesse d'alimentation et du niveau de remplissage (L) détecté, dans laquelle l'unité de commande (5) comprend l'unité de commande de presse (50).

3. Presse rotative (1) selon l'une quelconque des revendications précédentes, dans laquelle l'unité de commande (5) est configurée, indépendamment d'une vitesse du système de presse (3), pour maintenir constante la vitesse d'alimentation de préférence à une vitesse de point de consigne définie, si l'agencement de capteurs (4) détecte le niveau de remplissage (L) comme correspondant au point de consigne de niveau de remplissage (L_{SP}).

4. Presse rotative (1) selon l'une quelconque des revendications précédentes, dans laquelle l'unité de commande (5) est configurée, indépendamment d'une vitesse du système de presse (3), pour augmenter la vitesse d'alimentation de préférence à une première vitesse, si l'agencement de capteurs (4) détecte le niveau de remplissage (L) comme étant au-dessous du point de consigne de niveau de remplissage (L_{SP}), et pour diminuer la vitesse d'alimentation de préférence à une deuxième vitesse, si l'agencement de capteurs (4) détecte le niveau de remplissage (L) comme étant au-dessus du point de consigne de niveau de remplissage (L_{SP}).

5. Presse rotative (1) selon l'une quelconque des revendications précédentes, dans laquelle l'agencement de capteurs (4) comprend en outre des capteurs numériques intermédiaires (44, 45) pour détecter un niveau de remplissage (L_{I,UP}), (L_{I,LOW}) entre le point de consigne de niveau de remplissage (L_{SP}) et la limite de niveau de remplissage supérieure et/ou inférieure (L_{UP}, L_{LOW}),
dans laquelle l'unité de commande (5) est configurée, indépendamment d'une vitesse du système de presse (3), pour augmenter la vitesse d'alimentation, de préférence à une troisième vitesse supérieure à la première vitesse, si l'agencement de capteurs (4), de préférence au moins le troisième capteur numérique (43), détecte le niveau de remplissage (L) comme diminuant, de préférence comme chutant au-dessous de la limite de niveau de remplissage inférieure (L_{LOW}), et pour diminuer la vitesse d'alimentation, de préférence à une quatrième vitesse inférieure à la deuxième vitesse, si l'agencement de capteurs (4), de préférence au moins le deuxième capteur numérique (42), détecte le niveau de remplissage (L) comme augmentant, de préférence comme dépassant la limite de niveau de remplissage supérieure (L_{UP}).

6. Presse rotative (1) selon l'une quelconque des revendications précédentes, dans laquelle la limite de niveau de remplissage supérieure (L_{UP}) et la limite de niveau de remplissage inférieure (L_{LOW}) définissent une plage de détection de niveau de remplissage (D), qui s'étend de préférence sur une longueur de détection s'étendant entre le dispositif d'alimentation (20) et le système de presse (3) comprise entre 20 mm et 100 mm, de préférence entre 25 mm et 40 mm, plus préférablement d'environ 35 mm.

7. Presse rotative (1) selon l'une quelconque des revendications précédentes, dans laquelle
• des capteurs adjacents dudit ensemble de capteurs sont distants l'un de l'autre le long d'une direction d'alimentation (F) s'étendant entre le dispositif d'alimentation (20) et le système de presse (3) dans une plage comprise entre 10 mm et 40 mm, de préférence 15 mm à 30 mm, plus préférablement de 18 mm, et/ou
• de multiples ou tous les capteurs dudit ensemble de capteurs sont prévus conjointement sur ou fixés à un support (40) commun.

8. Presse rotative (1) selon l'une quelconque des revendications précédentes, dans laquelle l'agencement de capteurs (4) est configuré de telle sorte que le point de consigne de niveau de remplissage (L_{SP}) peut être déplacé par rapport au tuyau d'alimentation (21) pour augmenter ou diminuer le point de consigne de niveau de remplissage (L_{SP}), dans laquelle ledit déplacement est fourni par l'agencement de capteurs (4), de préférence le support (40), étant déplaçable par rapport au tuyau d'alimentation (21) et/ou l'unité de commande (5) étant configurée pour sélectionner l'un quelconque des capteurs de l'ensemble de capteurs pour être le premier capteur numérique.

9. Presse rotative (1) selon l'une quelconque des revendications précédentes, dans laquelle le tuyau d'alimentation (21) a une longueur d'alimentation (FL) s'étendant entre le dispositif d'alimentation (20) et le système de presse (3) comprise entre 50 mm et 4 000 mm, de préférence entre 100 mm et 2 000 mm, de préférence entre 200 mm et 1 500 mm, plus préférablement entre 500 mm et 1 000 mm, et le plus préférablement de 700 mm.

10. Presse rotative (1) selon l'une quelconque des revendications précédentes, dans laquelle le tuyau d'alimentation 21 vibre ou s'agite.

11. Presse rotative (1) selon l'une quelconque des revendications précédentes, dans laquelle les cavités de matrice (31) sont agencées et de préférence uniformément réparties autour de l'axe de rotation (R), et/ou
dans laquelle les cavités de matrice (31) ont une section transversale polygonale lorsqu'elle est observée dans une direction de pressage (P) des poinçons (32), par ex. rectangulaire ou carrée, pour presser un cube de bouillon ou un comprimé de bouillon.

12. Presse rotative (1) selon l'une quelconque des revendications précédentes,
dans laquelle le système d'alimentation (2) comprend en outre :
• une trémie (22) pour le basculement de la matière (M) alimentaire de pressage sur le dispositif d'alimentation (20), et
• un tamis (23) étant prévu entre le dispositif d'alimentation (20) et le tuyau d'alimentation (21) pour tamiser la matière (M) alimentaire de pressage alimenté, le tamis (23) étant de préférence déplaçable ou fixé, et
• un dispositif d'alimentation de presse (25), comme un sabot d'alimentation ayant de préférence une hélice d'alimentation, pour distribuer la matière (M) alimentaire de pressage fourni par le tuyau d'alimentation (21) aux cavités de matrice (31), étant prévu entre le tuyau d'alimentation (21) et les cavités de matrice (31) du plateau de matrice rotatif (30) pour permettre une alimentation définie des cavités de matrice (31) passant dans le tuyau d'alimentation (21) lors du déplacement en rotation des cavités de matrice (31) du plateau de matrice rotatif (30) par rapport au système d'alimentation (2), et/ou dans laquelle le dispositif d'alimentation (20) comprend un dispositif d'alimentation à vis ou à vibrations, et/ou un moteur électrique (24) pour faire fonctionner le dispositif d'alimentation (20) à une vitesse d'alimentation définie commandée par l'unité de commande (5), et
dans laquelle le système de presse (3) comprend en outre :
• un poste de pressage (33) pour appliquer une force de pressage (S) sur les poinçons (32), et
• un poste de décharge de comprimé (34) pour décharger le comprimé alimentaire (T) comprimé, de préférence un cube de bouillon ou un comprimé de bouillon.

13. Procédé pour presser un comprimé alimentaire (T), comme un cube de bouillon, par compression d'une matière alimentaire de pressage (M), comme une poudre alimentaire, avec une presse rotative (1), le procédé comprenant les étapes consistant à :
a) alimenter en continu la matière (M) alimentaire de pressage par un dispositif d'alimentation (20) à un tuyau d'alimentation (21) d'un système d'alimentation (2) de la presse rotative (1), dans lequel un niveau de remplissage (L) de la matière (M) alimentaire de pressage dans le tuyau d'alimentation (21) est détecté par un agencement de capteurs (4),
b) recevoir successivement une quantité de matière (M) alimentaire de pressage fournie par le tuyau d'alimentation (21) dans une pluralité de cavités de matrice (31) d'un plateau de matrice rotatif (30) d'un système de presse (3) lors d'un déplacement en rotation du plateau de matrice rotatif (30) pouvant être entraîné autour d'un axe de rotation (R) par rapport au système d'alimentation (2), et
c) produire des comprimés alimentaires (T) à l'intérieur des cavités de matrice (31) au moyen de poinçons (32) lors du déplacement en rotation du plateau de matrice rotatif (30), dans lequel, lors d'une alimentation continue de la matière (M) alimentaire de pressage au tuyau d'alimentation (21), une vitesse d'alimentation du dispositif d'alimentation (20) est commandée en fonction du niveau de remplissage (L) détecté pour maintenir le niveau de remplissage (L) au niveau d'un point de consigne de niveau de remplissage (L_{SP}) défini et dans lequel l'agencement de capteurs (4) comprend un ensemble d'au moins trois capteurs numériques (41-45) ayant un premier capteur numérique (41) pour détecter le niveau de remplissage (L) au niveau du point de consigne de niveau de remplissage (L_{SP}), au moins un deuxième capteur numérique (42) pour détecter le niveau de remplissage (L) au niveau d'une limite de niveau de remplissage supérieure définie (L_{UP}) étant au-dessus du point de consigne de niveau de remplissage (L_{SP}), et au moins un troisième capteur numérique (43) pour détecter le niveau de remplissage (L) au niveau d'une limite de niveau de remplissage inférieure (L_{LOW}) définie étant au-dessous du point de consigne de niveau de remplissage (L_{SP}), le procédé comprenant en outre les étapes consistant à :
augmenter la vitesse d'alimentation de préférence à une troisième vitesse supérieure à la première vitesse, indépendamment d'une vitesse du système de presse (3), si l'agencement de capteurs (4), de préférence au moins le troisième capteur numérique (43), détecte le niveau de remplissage (L) comme diminuant, de préférence comme chutant au-dessous de la limite de niveau de remplissage inférieure (L_{LOW}), et diminuer la vitesse d'alimentation de préférence à une quatrième vitesse inférieure à la deuxième vitesse, indépendamment d'une vitesse du système de presse (3), si l'agencement de capteurs (4), de préférence au moins le deuxième capteur numérique (42), détecte le niveau de remplissage (L) comme augmentant, de préférence comme dépassant la limite de niveau de remplissage supérieure (L_{UP}) et dans lequel les capteurs numériques (41-45) sont des capteurs infrarouges à DEL.

14. Procédé selon la revendication 13, dans lequel le tuyau d'alimentation 21 vibre ou s'agite.
